Europäisches Patentamt

(19) European Patent Office

Office européen des brevets

(11) Publication number : 0 621 330 A1

# (12) EUROPEAN PATENT APPLICATION

(21) Application number : 94400835.8

(22) Date of filing : 18.04.94

(51) Int. Cl.$^5$ : **C09K 7/04,** C09K 7/00, E21B 43/02, E21B 43/25, E21B 33/13, E21B 33/138

(30) Priority : 21.04.93 FR 9304801

(43) Date of publication of application : 26.10.94 Bulletin 94/43

(84) Designated Contracting States : DE DK IT NL

(71) Applicant : SOFITECH N.V. rue de Stalle 140 Uccle (1180 Bruxelles) (BE)

(72) Inventor : Maroy, Pierre 2, allée Charles Nicolle F-78530 Buc (FR) Inventor : Baret, Jean-François 23, rue de Montreuil F-75011 Paris (FR)

(74) Representative : Hagel, Francis SCHLUMBERGER DOWELL, Patent & Licensing Dept., 26 rue de la Cavée, P.O. Box 202 F-92142 Clamart Cédex (FR)

(54) Fluids for oilfield industry their preparation and their use in drilling, completion and well treatment operations, and in fracturing and matrix treatment operation.

(57) The particulate phase of fluids according to the present invention comprises particles which have specifically adapted size ranges or granulometries.

All the essential properties of fluids and their cost are very clearly improved.

Application to all the well operations in oil wells or the like, to matrix treatment and the like.

EP 0 621 330 A1

The present invention relates to the technical domain of oil, water and geothermal wells or the like and the corresponding operations as well.

The present invention applies to the drilling fluids, the fracturing fluids, the spacers, the diverting fluids the gravel-packing fluids and generally all simular fluids and all the operations using these fluids.

These operations have been very well known in the art, as well as in their principle that in their performance ; the great difficulties of their performance have been also well known.

Thus, these data would be really uselessly recalled here. That is why only the essential will be briefly mentioned below.

The drilling fluids, in particular the drilling muds, are well known. These are generally loaded fluids that have to present very precise characteristics.

Further to the generally searched properties of physio-chemical compatibility with the drilled formations, these fluids have to present very precise characteristics, principally towards density, rheology, lubricating properties and fluid loss, without jeopardizing the rate of penetration.

Density plays an esentiel hydrostatic function towards the drilling safety, in order to prevent the hole invasion by the formation fluids which could lead to the catastrophic blow-out or, on the other hand, fracture the drilled formations and lead to a fluid loss putting also at stake the well controlling.

Density has also an influence on the stability of the opened hole, the weight of the mud column contributing to balance the lithostatic pressure exerted on the function.

- The rheologic characteristics must reach to a compromise between a minimal charge loss ans a good ability to raise up the rubble due to the drilling throughout the annulus space, as far as the ground.
- Generally, it is searched to minimize the fluid loss due to fluid exposure to porous formations, in order not to jeopardize neither the safety of the operation nor its economic viability. A special care is given during the payzone drilling, in order to minimize the damaging due to the fluid invasion that requires to resort to curative treatments.

It will be easily understood that the design of a drilling mud that fits to a particular situation, results from a subtile compromise between sometimes contractictory aims. As an example, it is usually admitted by those skilled in the art, that the aforementionned searched properties relative to fluids loss, are harmful to the rate penetration, especially for roller-bits. It is also mentionned that high solid contents, that sometimes can't be prevented on account of the need for a high density, and/or high viscosities are harmful to the rate penetration.

These contradictory aims are currently -only in part- solved by chemical additives, a solution whose drawbacks are further mentionned, especially their potential impact on environment and their high cost.

On the contrary, the present invention suggests that, thanks to a relevant choice of the size range of the suspended solids in the mud, it is possible to reconcile these apparently incompatible aims, or at least to minimize their antagonistic interactions.

Another particular domain relates to the slim holes drilling. This technique requires low viscosity fluids, a very good controlling of the water loss, a very slight tendency to settling and bridging of the particles in an annulus that is often very narrow, in order to avoid too strong charge losses. An additional difficulty appears when a high density mud is required. The high ratio between the solids and the fluid is then the cause of instabilities ("Boycott" effect). The present invention provides a solution to these problems.

In the drilling-fluid application for the slim holes, it will be avoided to raise the mud density by using particles whose size is that of cuttings, in order to minimize the viscosification effect of the mud by the cutting and to favour the separation of the cutting of the weighing agents on the shakers.

To solve the problem of drilling rubble reinjection, the rheology shall not be too high.

In the prior art, this requirement prevents the high concentrations in solid matters (other requirements, but contradictictory). Further, if the drill bit produces big drillings, they have to be crushed fine according to the prior art.

It will be seen hereafter that the invention makes it possible to have , at the same time, a low rheology and a high concentration in solid matters, and tolerates and even prefers more crude crushings. The result is particularly efficient and economical. In the application relative to the cutting reinjection, it will be prefered to use two or three disjointed cross profiles of cuttings, whose size range of the bigger will be chosen narrow to minimize the viscosity reduction and therefore to be able to incorporate more solids, either by selecting suitable filters, or by adjusting the crusher in an appropriate way. On the contrary, the finest cross profile will be very broad in the little sizes in order to minimize the filtrate controlling and the suspension stability.

Another important type of fluid used in the petroleum and related industries consists of the spacer fluids.

During the cementing operation above described, it is formally required to physically separate the drilling mud from the cement slurry due to chemical incompatibilities. Either mechanical apparatus or separating inert fluids are used.

These fluids have two main functions, the first one being to completely remove or "displace" the drilling mud, and the second one being to prevent from any cement/mud contact. Once again the rheology, density and velocity profile characteristics are of prime concern, as well as the fluid loss control and the stability of settling control.

In the application to spacers, too important size ratio between two cross profiles whose size ranges are contiguous, and the ratio won't be preferably higher than 15, because in this application, a very good resistance to settling is needed, as well as a high fluidity for the turbulent state applications, and the aim will be to minimize the minimal particles concentration to obtain a hindered settling.

As far as the fracturing fluids are concerned, these fluids are viscosified or gelified and/or crosslinked, the function of which being to apply the pressure to the rocks, which are around the well, up to the point the formation is fractured. One essential function of these fluids is to be able to be charged with proppant and especially to carry this proppant without settling into the fracture created by the fluid. Once again the rheology, especially the so called "suspensoid" property and the stability, of these charged fluids is of first importance, as well as the property of fluid loss control while setting.

Another essential characteristic of these fluids, as well as of gravel-packing fluids which will be mentioned below, is that they must retain a good permeability characteristic when compacting.

A particular type of the fracturing fluids consists of the pre-pad fluids whose function is to cover the fracture wall to optimize the action of the fracturing fluid including the support agent, and avoid the fluid loss, especially in the porous formations.

It will be seen that the invention makes it possible to form a cake both fine and not penetrating into the matrix. This cake will have a very good behaviour and will be easily disintegrated in presence of the support agent after the end of the operation, when the pressure inversion occurs and the well production is started (two other contradictory imperatives in the prior art).

For the pre-pad application for fracturing, the biggest particles of the pre-pad will be chosen, with a largely inferior size (two size ranges at least) to the proppant size, in order to favour the loosening of the cake from the wall of the fracture when the production is started, and the falling of pieces of the cake. The PVF will be chosen very high, each cross profile of particles having a very narrow size distribution to obtain a very fine, hard and unporous cake, which favours its loosening at the end of the operation and makes it possible to better control the fluid losses during the opening of the fracture.

Moreover, the pre-pad application in fracturing indicates that the invention also represents a solution for the diverters, at the time of the well known acid treatments of the matrix.

The diverter application is very close to the pre-pad application with however a difference, because there is no limit in the size of the biggest particles that can be used, since at the end of the operation the cake doesn't fall in a narrow fracture but in the wellbore.

Another fluid type to which the present invention relates, consists of the fluids used to place the gravel pack. These fluids must also carry particulate materials up to the formation in order to place them therein, the function of these particulate materials being to form a screen to prevent the fine particles from plugging the zones near the perforations from which the oil is produced.

Once again, a very accurate control of the rheology, viscosity, stability and suspensoid property is required for such fluids.

In addition to the above mentioned permeability property, these fluids require a very good fluid loss control while setting.

In the gravel pack fluids, a prefered embodiment of the method consists in that the chemical nature of the particle cross profiles that are used, except the cross profile of the great diameter particles, should be such that the particles, might be degraded.

This makes it possible to clean out the gravel pack before the setting, for example by an acid treatment. On account of the multicontinuity of the thus formed cake, at the time of the fine particles destruction, the biggest particles that are in contact the one with the others, don't move, which enables the gravel pack to be very porous.

The particles sizes must be chosen not too remote between the different cross profiles -ratio 10 to 15, in order that the little particles might be well jammed in the cake. For same reasons, slurries with very high particles contents will be chosen. Thanks to the technique, this is possible on account of the low viscosity and on account of the reduced slurry sensitivity to potential fluid losses.

As above mentioned, all these fluids and all their required properties are well known in the art.

Numerous additives of different kinds are also known and they are used in the art alone or in various combinations in order to design the better possible fluid for a given well.

This fluid design is never easy. This is often imperfect because many required properties imply using antagonistic means.

On the other hand, a certain degree of uncertainly is always present as far as the bottom hole conditions, for example, maximal temperature, thief zones presence etc..., are concerned. In the prior art, these uncertainties imply, for example, an overdosage of some additive(s) to avoid a major risk.

This implies an important complexity of fluid design, used means and used additives, with the inherent risks and costs.

The present invention provides a design technique of the petroleum industry fluids, characterized by a great simplicity, a low cost, and the excellence of the achieved properties. A spectacular improvement of all the useful properties is indeed achieved in a easy manner without producing any disadvantages and especially without any antagonisms between the achieved effects.

The method according to the present invention is characterized in that into the considered fluid is incorporated insoluble particulate additives so that their combination with each other and with the other fluid particulate components will produce a size range distribution which will deeply change in an unexpected way numerous fluid essential properties. Most preferably, said particulate additives are of mineral type. The mineral additives are most preferred because of their low cost and their innocuousness on the environment. However, the present invention can also use plastic wastes or other wastes, obviously to be crushed according to the expected size range. As a secondary consideration, this may have a benificial effect on the environment by disposing in the ground (obviously controlled) wastes which can not be degraded and otherwise which should be put in a waste disposal area.

As far as the drilling muds are concerned, an imposed particulate material consists of cuttings with which the mud will be charged. This renders the drilling mud design according to the present invention especially difficult.

The fracturing and gravel-packing fluids will imply also important difficulties because their permeability will tend to be decreased by the fines incorporated according to the present invention (this is why these fines were constantly excluded from such fluids in the prior art).

In the state of the art, additions of particulate minerals to a petroleum fluid have been already carried out, as well known, in order to improve some properties. It has been also known that most of the above mentioned essential properties, in the concerned fluids, have been controlled up to now (with the above indicated limits) with the help of organic additives.

These additives set a serious problem which has been well known in the art and which is that most of them have a simultaneous and contradictory action on a given property or simultaneously on several properties.

For example, a dispersing agent lowers the viscosity but improves the settling. A fluid loss control agent obviously lowers the fluid loss but increases the viscosity. Moreover, most of recently known and used additives also have an influence on the fluid action mechanisms and/or on the formation itself.

It has been also known that the efficiency range of such additives is often narrow due to an important sensivity to temperature, to ion concentration (salts) of the interstitial water, etc..., and possibly to the formation components. Despite long and expansive developments, the result is often a formulation which is suitable only for that temperature and/or that salinity and/or that formation, etc...

This has been admitted in the prior art for several decades. Thus, the number of additives has been multiplied with generally specific conditions of use for each one. In order to mitigate the disadvantages of the more and more important complexity of the possible solutions, numerous softwares have been developed. These softwares only point out the chemical formulation complexity, and make easier the management of this complexity, but without solving the disadvantages.

In a surprising manner, the present invention removes the complexity.

For the first time since several decades, instead of combining together more and more additives which are more and more complex, it has been discovered that numerous essential properties could be met by reasoning in terms of selections and combinations of (preferably mineral) particulate products having different size ranges.

Such (mineral) products used according to the present invention are especially silica, hematite (or other iron oxide), barium hydroxide, and also carbonates, alumina etc..., and it will be also made mention of organic products such as plastic wastes and other obviously compatible wastes. Especially, the choice could be determined by, for example, the density to achieve. It has been discovered that, by using a selected combination of several size ranges of this type combined with the size range of the other components of the considered fluid, a converging set of favorable properties have been spontaneously achieved, providing that the size ranges of the considered products are selected, as well as their respective proportions, in order to work at the maximum PVF, or as close as possible to this maximum PVF (PVF being the Packing Volume Fraction, and also providing that the proportion of solid matters in relation to the mixing fluid is selected so that the fluid is located in the hindered settling state. It is known that, in such a state, solid particles behave " collectively" like a porous solid material. On the contrary, out of this state, the different size particles will settle separately with different speeds. This hindered settling state corresponds, into pratice, to much higher solid matter concentrations in

EP 0 621 330 A1

the fluid than that admitted in the prior art.. It has been discovered a high solid matter concentration theshold beyond which the hindered settling state appears.

This threshold depends of course of the chosen size ranges.

It is important to mention that such concentrations that had been judged as impossible to use in the prior art (serious problems of too high viscosity and mixability) are usable according to the invention thanks to the choice of conditions that are close to the PVF max.

The invention consists therefore of the <u>combination</u> of three momentous features:

a) use of at least three particulate materials that are insoluble in a (preferably) aqueous medium, and preferably mineral, the (at least) three size ranges being "disjointed" (see further description)

<u>and</u>

b) the choice of the proportions in the solid matters defined at a), in relation to the mixing so that the achieved fluid should be located in the hindered settling state

<u>and</u>

c) the choice of the proportions in the solid matters defined at a), between each other, and according to their respective size ranges, so that the operations are run at the PVF max of the whole of the considered particles, or as close as possible to the PVF max.

It has been seen that the "hindered settling" threshold has never been neither reached nor approched in the prior art of the oil industry particulate materials. On the contrary, those skilled in the art used to take care in order to remain to solid matter concentrations that were low enough to be sure to avoid the foreseeable serious problems.

Concerning the criterion in relation to the PVF, its importance has never been mentionned in the general prior art of particulate materials.

Thus, according to the invention, the rheology, the free water, the settling, the fluid loss control, the compressive strength, the stability, the suspensoid properties and the permeability have been favourably and simultaneously improved, and all this without substantially needing to use conventional organic additives.

Indeed, the present invention consists of, and allows, combining the above sizes to very favorable values, by combining mineral materials of different, approprietly selected, size ranges, after what an accurate adjustment of properties is able to be carried out by adding only small quantities of conventional organic additives.

Without being limited by any theory, it seems that the constant prior art has never achieved to master a too important number of parameters which occur in rheology etc... when there are more than two size ranges.

On the contrary, the present invention is based on a radically opposed concept, called below "multimodal" and the optimum of which is the "multicontinuity". This concept has allowed mixing simultaneously more than two different size ranges including large dimensions. The result has been that, provided that at least a small quantity of fines had been mixed , no significant settling occured, but, moreover, in an very unexpected manner, all the fluid essential properties were really improved without any use of conventional additives.

The "multimodal" concept (as well as its optimal realisation constituted by the multicontinuity of the particulate phases) according to the present invention will be more explained from the following detailed description.

It is linked to the aforementionned PVF feature and is based first on the use of large dimension mineral particles (the "large"). This absolutely goes against the constant prior art teaching according to which the presence of large particles, and, all the more so, very large particles definetely implies a settling risk, what is true. As these particles must be present in the considered fluids (cf above), the prior art has just multiplied chemical palliatives and correctors.

The present invention has overcome this prior art technical "bar" by simultaneously using fine (mineral) particles (the "fines") and it has been discovered that the "large" or "very large", fluid ("medium") particles and "fines" cooperation stabilized the fluid instead of producing the expected disadvantages (settling, viscosification...) according to the prior art teaching. The invention, according to three above criterions, makes it possible to incorporate "very large" particles.

In any case, the invention significantly reduces the cost of the considered oil fluids, which is an imperative that has never been reacted foe about ten years in oil industry. Obviously, once this "multimodal concept had been stated, the different combinations between the "medium" particles, one or several "fines", one or several "larges", or the like, have been tried to be multiplied. All the results have been convergent.

According to the above principale of the present invention, which consists of incorporating the "large" or "very large", and/or "medium" particles combined with "fine" and possibly "very fines" particles, it has been noted that a "trimodal" combination of the further type (not by way of limitation) :

- "medium        (average dimension = 10 - 20 micrometers
- "fines"        (average dimension = 1 micrometer)
- "very fines"        (average dimension = 0.1 - 0.30 micrometers)

5

already allowed the almost perfectly achievement of all above mentioned advantages. The absence of conventional additives should be obviously noted.

However, a "tetramodal" combination of the further type (also not by way of limitation) :
- "large" (average dimension = 200 micrometers and more)
- "medium" (average dimension = 10 - 20 micrometers)
- "fines" (average dimension = 1 micrometer)
- "very fines" (average dimension = 0.1 - 0.30 micrometers) furthermore improves all of the desired properties.

It has been noted according to the invention that, in spite of the very strong solid matter concentrations that are possible and even searched according to the invention, the whole mixability was improved in a surprising way.

Other essential feature, the invention makes it possible to reduce the rheology sensitivity towards external features (such as fluid loss, and so on). This brings about a much higher operation safety. It is due to the abovementionned fact, namely that the invention advocates to work above the solid matter threshold corresponding to the "hindered settling".

According to the prior art, such concentrations should have inescapably brought about a precipitation and a dehydratation.

On the contrary, thanks to the respect of the PVF max criterion according to the invention, this will not occur. Generally, the "tetramodal" mode will be prefered to the "trimodal" mode.

An essential characteristic which has to be respected is that the used size ranges do not widely overlap each other.

In practice, it can be roughly considered that the criterion which has to be respected is that the size range curves have an "offset" of at least a half-peak distance as below depicted.

This criterion can be then roughly symbolized by the "disjointed size ranges" notion which will be used below for more clarity.

For example, very good results have been achieved with a "offset" ratio of about 5 to 50 and preferably about 10 between each average dimension, as according to the tri and tetramodal above examples but not by way of limitation.

Obviously, a "pentamodal" mode etc... produces results which are at least as interesting as the results given by a tetra or even tri-modal mode. However, the additional property profit is linked with additional complexity, and these modes, though they are realizable and usable, will be less preferred except for some very particular applications.

The further combinations will also be cited (according to the above mentionned criterions) between the further categories (not by way of limitation) :
- "very large", for example glass maker sand, crushed wastes (average dimension > 1 mm) and/or
- "large", for example sand or crushed wastes (average dimension = 200-800 μm) and/or
- "medium" like crushed wastes (average dimension 10-20 μm) and
- "fine" like, for example, a micromaterial, or some micro fly ashes or some other micro slags (average dimension 0,5-10 μm) and/or
- "very fine" like, for example, a latex or some pigments or some polymer microgels like a usual fluid loss control agent (average dimension 0.05-0.5 μm) and/or
- "ultra fines" like some colloïdal silica or alumina, etc... (average dimension 7-50 nm).

"Ultra-fine" particles are only used for example in the cases where an extreme stoppage or plugging is desired in an agressive medium, and for example at high temperature, when cost is not the most important feature.

In many cases, it will be possible to avoid the use of "very fine" particles. Indeed, the further improvement in the properties, which is brought about by adding "very fine" particles, could be economically unprofitable, especially as far as the filtrat control is concerned. It will be noted that this is possible only thanks to the already momentous improvement achieved according to the invention by a combination that doesn't include any "very fine" particles, the said improvement making it possible to content oneself with very weak amounts of costly organic additives.

In practice, as will be shown by the further examples, the main part of usual cementing can be achieved (always with respect for the three basic afore mentionned criterions) with combination of the type (not by way of limitation) :

- very large
- large
- medium
- fine
   or
- large
- medium (crushed wastes)
- fine (micro fly ashes, etc...)
   and other combinations that will appear obvious for those skilled in the art.

Generally speaking, the invention consists of the combination of :

A. "Large" particles having an average dimension of about 100-300, preferably 200 micrometers, and more, selected according to the fluid to be designed, among for example gravel, sand, silica, carbonate, barium, hydroxide, hematite and other iron oxides or the like, and some crushed plastic wastes or the like.

B. "Medium" particles (10-20 micrometers), for example crushed wastes.

C. "Fine" particles (about 1 micrometer) selected among :

- the carbonates (marble, chalk, calcite...)
- the barium hydroxide ("Blanc fixe")
- the hematite and other iron oxides
- the silicate, the carbon, the sulfur or the like
- and some fine industrial wastes.

D. "Very fine" particles (about 0.1 micrometer) as example a latex, a silica condensate (silica fume) or a condensate of manganese oxide fumes.

As it has been seen, it will also be very profitable to use "very large" particles (> 1 mm) and, in the cases for which the technical problems to be solved are extreme, "ultra fine" particles. A particularly profitable combination will be of the "trimodal" type :

- large sand (glass maker sand) 350 micrometers
- material (some crushed industrial wastes) 10-20 micrometers
- microsilica or industrial wastes 0.5-3 micrometers, the said combination being added with a very slight amount (0,5 % in relation to the solids) of fluid loss control agent, and possibly very slight amounts of other usual organic additives, to optimize and refine the fluid properties.

The following examples illustrate the invention without however limiting its scope.

The fields of relative proportions for the different kinds of particulate materials won't be given here.

Indeed, these percentages of A, B, etc... must be established according to the achievement criterion of the PVF max or of a PVF as close as possible to the PVF max. It will be remained that the calculation of the PVF is known and usual. It is based on known equations including a "cutting" of each size range of each component of the particulate blending. In the further examples, the PVF values have been achieved by dividing each size range curve of each component into 31 "fractions".

The following examples illustrate the invention without limiting its scope.

EXAMPLE 1

A spacer was prepared with :

- 206 g of water
- 656 g of calcium carbonate (100 micrometers) (73 % of the whole) and microcarbonate (2 micrometers) (27 % of the whole),

which forms a so-called "bimodal" combination according to the invention.

The density is 16 ppg ($1,9 g/cm^3$).

At rheometer Fann 35, with a rotor number of 1, a BOB number of 1, a spring number of 1 and a spring strength of 0, the following results at ambient temperatur are obtained :

| Standard | 10D | PV (cP) | Ty lbf/100ft2 | Pa | n | k lb.s n | viscosity cP |
|---|---|---|---|---|---|---|---|
| Newtonian | 0,945 | - | - | - | - | - | 142 |
| Bingham | 0,998 | 82,9 | 40,6 | 19,4 | - | - | - |
| Power law | 0,995 | - | - | - | 0,358 | 0,122 | - |

Pv = plastic vistosity

Ty = shearing threshold

A settling test effected at 185°F (85°C) by measuring the density at the top and the basis of a 250 ml fluid column according to API standards : diameter 40 mm, height 20 cm measure after 2 hours, gives the following results :

Top 1.85 g/cm³ (15.5 ppg)

Basis 1.86 g/cm³ (15,6 ppg)

Free water: 1.5 %

The apperance of both good rheology and stability, without any organic additive, can be noticed.

## EXAMPLE 2

A spacer according to the invention is prepared with :
- 205 cm³ of water
- 2.05 g of polynaphtalene sulfonate (distributing agent)
- 656 g of calcium carbonate (about 100 micrometers) (66.4 % of the whole in volume), of microcarbonate (2 micrometers) (24.5 %) and of microsilica (0.5 micrometer) (9,1 %).

The density is 1.9 g/cm³ (16 ppg). In the same conditions as in example 1, the following results are obtained :

| Standard | 10D | PV (cP) | Ty lbf/100ft2 | Pa | n | k lb.s n | viscosity cP |
|---|---|---|---|---|---|---|---|
| Newtonian | 0,998 | - | - | - | - | - | 83.6 |
| Bingham | 1 | 77 | 4.54 | 2.17 | - | - | - |
| Power law (ambient Temperatur) | 0,996 | - | - | - | 0.72 | 0.00836 | - |
| Newtonian | 0,987 | - | - | - | - | - | 46.2 |
| Bingham | 0,999 | 37.5 | 6,05 | 2.89 | - | - | - |
| Power law (85°C, 185°F) | 0,995 | - | - | - | 0.514 | 0.0151 | - |

A settling test, in the same conditions as in example 1, gives the following results :

|        | at 85°C (185°F)         | at 204°C (400°F)        |
|--------|-------------------------|-------------------------|
| Top    | 1.84 g/cm³ (15,4 ppg)   | 1.82 g/cm³ (15,2 ppg)   |
| Basis: | 1.84 g/cm³ (15,4 ppg)   | 1.83 g/cm³ (15.3 ppg)   |

It can be seen that, with a very low distributing agent proportion, this trimodal combination leads to a very profitable low rheology and a lack of settling in spite of this very low rheology.

EXAMPLE 3

A trimodal combination according to the invention was prepared on the basis of:
Sand (about 180 micrometers) 66,4 % BVOS *
Silice flour (about 20 micrometers) 24,5 % BVOS
Carbonate (variable dimension) 9,1 % BVOS
Calculated density      : 1,9 g/cm³ (16 ppg)
Calculated porosity     : 46 %
The results obtained according to the carbonate dimension are laid further:

| Average dimension* of the carbonate | 4 micrometers | 2 micrometers | 1,3 micrometers |
|-------------------------------------|---------------|---------------|-----------------|
| PV (cP)                             | 160           | 163           | 108             |
| Ty 1b/100 ft2                       | 21,5          | 2 47          | 10              |
| Pa                                  | 10,3          | 11,8          | 4,79            |

\* Carbonates will be chosen for example, between about 1 to 5 micrometers.

The same measures were effected by using a 2 micrometer -average dimension- carbonate and by adding a very low proportion of polynaphtalene sulfonate (distributing agent).
The further results were obtained :

*BVOS=by volume of solids

| Distributing agent<br>% BWOW<br>(% by weight of water) | 0 | 0,1 |
|---|---|---|
| PV (cP) | 163 | 121 |
| Ty<br>1b/100 ft2 | 24,7 | 17,0 |
| Pa | 11,8 | 8,14 |

Obviously, both good rheology and stability have been achieved for the considered systems.

EXAMPLE 4

A tetramodel system according to the invention has been prepared by using two different silica, an alumina and a latex

| Sand (180 micrometers) : | 64,1 % BVOS |
|---|---|
| Silica Flour (20 micrometers) : | 24,0 % BVOS |
| Alumina $Al_2O_3$ (density 3,85) : | 8,8 % BVOS |
| Latex styrene-butadiene : (about 0.15 micrometers) | 3,1 % BVOS |

Alumina also plays a role of weighing agent.
In relation to the alumina particles average dimension, the further results are abtained.

| Average dimension* of alumina | - porosity (%)<br>- density<br>(g/cm3)     [ppg] | - PV (cP)<br>- Ty<br>(1b/100 f2)     [Pa] | filtrate | remarks |
|---|---|---|---|---|
| 1,3 micrometer | 40,6<br><br>(2.0)     [17.0] | 179<br><br>(1,7)     [0.81] | 40 ml in 7 min | slight settling |
| 0.5 micrometer | 40,6<br><br>(2.0)     [17,0] | 188<br><br>(12)     [5.74] | 40 ml in 13 min | 0,2 % of PNS (1) |

(1) PNS = polynaphthalenesulfonate

Both profitable rheology and interesting fluid loss control are obtained.

## EXAMPLE 5

A tetramodal system according to the invention was prepared with two different silica, a manganese oxide and a latex :

432 g of sand (180 micrometers)

162 g of silica flour (20 micrometers)

106,6 g of manganese oxide (1 micrometer)

("MICROMAX")

Variable amount of latex styrene - butadiene (about 0.15 micrometer)

The water amount is adjusted to obtain a density of 1.84 g/cm3 (14.5 ppg).

The following results are achieved :

| latex amount (g) | 15 | 16.26 | 20 | 24 | 32.26 | 45 |
|---|---|---|---|---|---|---|
| PV (cP) | 84 | 90 | 94 | 76 | 53 | 61 |
| Ty (Pa) | 14 | 10 | 10 | 11 | 5 | 8.5 |
| Filtrate* | 50 ml in 30 sec | 48 ml in 1 min 30 sec | 15 ml in 30 min | 9 ml in 30 min | 8 ml in 30 min | 7,5 ml in 30 min |
| Filtrate* according to API standards | 744 ml | 429 ml | 30 ml | 18 ml | 16 ml | 15 ml |

\* at ambient temperature.

It is noticed that both rheology and fluid loss control are very good.

## Claims

1 - A Fluid for oil, oilfield, geothermal industry and the like, characterized in that :

a) it comprises in addition to the basic fluid, at least three particulate additives whose size distribution, for each additive, is "disjointed" in relation to the other additives, at least one of these size ranges being "fine", and b) the relative proportions of the particulate additives are chosen in order to work at the PVF max of the considered combination of particulate additives, or as close as possible to the PVF max, ( PVF being the Packing Volume Fraction),

and c) the proportion of solid matter in relation to water or mixing fluid is chosen in order to work above the treshold of solid matter concentration at which the so-called "hindered settling" state appears.

2 - Fluids for oil, oilfield, geothermal industry and the like, according to claim 1, characterized in that they comprise whole or part of the further additives :

- "very large", for example glass maker sand, crushed wastes (average dimension > 1 mm) and/or
- "large", for example sand or crushed wastes (average dimension = 200-800 $\mu$m) and/or
- "medium" like crushed wastes (average dimension 10-20 $\mu$m) and
- "fine" like, for example, a micromaterial, or some micro fly ashes or some other micro slags (average dimension 0.5-10 $\mu$m) and/or
- "very fine" like, for example, a latex or some pigments or some polymer microgels like a usual fluid loss control agent (average dimension 0.05-0.5 μm) and/or
- "ultra fine" like some colloïdal silica or alumina, etc... (average dimension 7-50 nm).

**3** - Separating fluids or spacers for oilfied industry, characterized in that they consist of fluids according to claim 1 or 2.

**4** - Separating fluids according to claim 3, characterized in that they comprise, as particulate additives :
- calcium carbonate (about 100 μm) and microcarbonate (about 2 μm),
     or
- calcium carbonate (about 100 μm), microcarbonate (about 2 μm) and microsilica (0,5 μm)
     or
- sand (about 180 μm), silica flour (about 20 μm) and a carbonate (about 1 to 5 μm, preferably about 2 μm),
     or
- sand (180 μm), a silica flour (20 μm), alumina (0.5 to 1.3 μm), a latex (about 0,15 μm),
     or
- sand (180 μm), silica flour (20 μm), a manganese oxyde (1 μm) and a latex (about 0.15 μm).

**5** - Use of the fluids according to any of the claims 1 to 4 as :
- drilling fluids,
- fluids for reinjecting drilling fragments,
- fracturing fluids, including for "pre-pad",
- deviation fluids.

**6** - A method of drilling and/or treatment of oil, gas, water, geothermal wells or the like, characterized in that use is made of a fluid according to any of the claims 1 to 4.

**European Patent Office**

# EUROPEAN SEARCH REPORT

Application Number
EP 94 40 0835

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | EP-A-0 119 745 (HALLIBURTON)<br>* page 3, line 2 - page 4, line 8 *<br>* page 4, line 24 - page 5, line 29 *<br>* page 6, line 13 - page 7, line 6 *<br>* page 7, line 4 - line 30 *<br>--- | 1-6 | C09K7/04<br>C09K7/00<br>E21B43/02<br>E21B43/25<br>E21B33/13<br>E21B33/138 |
| A | US-A-4 232 740 (J.H.PARK)<br>* column 3, line 18 - column 4, line 59 *<br>* claims 1-32 *<br>--- | 1-6 | |
| A | US-A-4 217 229 (J.L.WATSON)<br>* column 1, line 6 - line 43 *<br>* column 5, line 48 - line 63 *<br>--- | 1-6 | |
| A | US-A-2 455 188 (W.F.OXFORD)<br>* column 2, line 5 - column 3, line 14 *<br>----- | 1-6 | |
| | | | TECHNICAL FIELDS SEARCHED (Int.Cl.5)<br><br>C09K<br>E21B |

The present search report has been drawn up for all claims

| Place of search | Date of completion of the search | Examiner |
|---|---|---|
| THE HAGUE | 30 May 1994 | Boulon, A |

EPO FORM 1503 03.82 (P04C01)